# EUROPEAN PATENT APPLICATION

(11) **EP 4 684 717 A1**
(43) Date of publication of application: **28.01.2026**
(21) Application number: 23944793.1
(22) Date of filing: 04.08.2023
(51) Int. Cl.: A47L 11/30

(54) **HANDHELD FLOOR SCRUBBER**

(30) Priority: 07.07.2023 CN 202310836992
(71) Applicant: Shanghai Aventurier Technology Development Co., Ltd, Shanghai 201203 (CN)
(72) Inventor: JIA, Yelei, Shanghai 201203 (CN); WANG, Peng, Shanghai 201203 (CN); WANG, Shenggui, Shanghai 201203 (CN); LIU, Rongming, Shanghai 201203 (CN)
(74) Representative: Reddie & Grose LLP
(86) International application number: PCT/CN2023/111258
(87) International publication number: WO 2025/010781

(57) **Abstract**

Provided is a handheld floor scrubber, comprising a guide part (1) and a base part (2); the guide part (1) has a guide portion (106), and the base part (2) has a connecting portion (201), the guide part (1) and the base part (2) being directly connected by means of the guide portion (106) and the connecting portion (201); the guide part (1) and the base part (2) jointly achieve adjustment in a cleaning direction and in a direction perpendicular to the cleaning direction; the guide portion (106) and the connecting portion (201) are directly connected and then have a hinge axis (G1) in the cleaning direction and a hinge axis (G2) crossing the cleaning direction. In the handheld floor scrubber, the two rotating parts are simply and efficiently connected, and thus can transmit torque and can also rotate about the central axes of respective rings; in addition, the rotations about the two axes are very close, such that the eccentric distance is small, achieving flexible and reliable torque transmission, thus reducing floor scrubber costs.

## Description

### TECHNICAL FIELD

The present application relates to the technical field of cleaning device, and in particular, to a handheld floor cleaner.

### BACKGROUND

With the gradual improvement of living standards, people's requirements for quality of life are getting higher and higher. More and more people are laying exquisite flooring or ceramic tiles on the floor of their houses. The flooring is made of various materials, such as wooden floors or stone floors. When the floorings or tiles are dirty and need to be cleaned, a conventional method is to use a broom, mop, or mop bucket to performing the cleaning. This method is time-consuming and laborious, and does not increase people's interest in cleaning work, which is disadvantage to keeping the indoor environment clean.

A steering device of the current floor handheld cleaning device generally includes three parts: a handheld operating component, a base component, and a middle double vertical hinge connecting member. The double vertical hinge can freely rotate in two axes perpendicular to each other, but there is a virtual axis perpendicular to these two axes at the same time. A handle is to apply a rotational torque on this virtual axis. Through the double vertical hinge, the torque is transmitted to the base, which turns the base.

The problem existing in the existing technology is in that: a certain distance is required to be formed between the two axes perpendicular to each other of the double vertical hinge to avoid mutual interference, and thus there is a problem that the front and rear swings and the left and right swings are not at the same point of action, resulting in that the transmission of torque needs to pass through an eccentric point, so it is neither flexible nor synchronous during the transmission of rotation. In addition, due to the existence of multiple hinged components and the need for intermediate components, the number of parts is increased and the cost is high.

### SUMMARY

In order to overcome the shortcomings and deficiencies in the prior art, an object of the present application is to provide a handheld floor cleaner, which can conveniently and flexibly control the steering of the cleaner, improve the operating experience of the floor cleaner, reduce the quantity of components and parts, and reduce cost.

In order to achieve the above object, the present application provides a handheld floor cleaner, which includes a guide part and a bottom part. The guide part includes a guide member. The bottom part includes a connecting part. The guide part is directly connected to the bottom part through the guide member and the connecting part. The guide part and the bottom part cooperates with each other to realize adjustments in a cleaning direction and in a direction perpendicular to the cleaning direction. After the guide member is directly connected to the connecting part, a hinge axis (G1) in the cleaning direction and a hinge axis (G2) transverse to the cleaning direction are formed.

Preferably, the guide part includes a handle part and a vacuum motor module, and the bottom part includes a cleaning module.

Preferably, the guide part is provided with a clean water tank and/or sewage tank detachably connected to the guide part.

Preferably, the bottom part includes a bracket, a squeegee, and a control unit.

Preferably, the bottom part further includes a battery detachably connected to the bottom plate. The battery is provided with a buckle. The bottom part is provided with a receiving groove configured to receive the battery. A slot that matches the buckle is provided in the receiving groove.

Preferably, the tool configured for floor cleaning is a plate brush or a roller brush.

Preferably, a rubber strip of the squeegee is detachably connected.

Preferably, the guide member and the connecting part are directly connected to each other to form two circular connecting structures or a ball-groove connecting structure.

The present application has beneficial effects as follows. The present application cancels the connecting structure, and two rotating components are connected to each other in a simple and efficient way. The two rotating components connected can not only transmit torque, and but also rotate through the central axis of their respective rings. In addition, the rotations of the two axes are very close to each other, and the eccentric distance is small, so that the transmission of torque is more flexible and reliable, and the controllability of the floor cleaner is improved. Within the same space, the simple structure improves connection strength and effectively reduces the cost of the floor cleaner.

### BRIEF DESCRIPTION OF THE DRAWINGS

FIG. 1 is a perspective schematic view of the present application.
FIG. 2 is a perspective schematic view of a guide member and a connecting part of the present application.
FIG. 3 is a perspective schematic view of a guide member and a connecting part according to another embodiment of the present application.

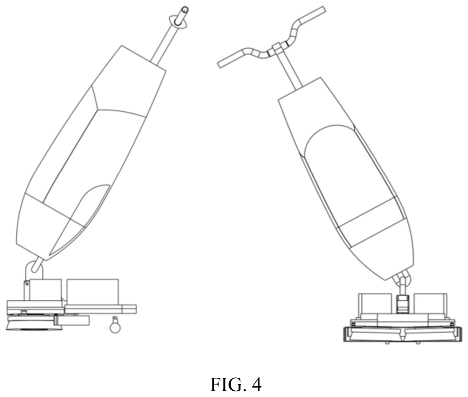

FIG. 4 is a schematic view of two annular connecting structures rotating along their respective axes according to the present application.

Illustration for reference signs:
1-Guide part, 101-Handle, 102-Buckle, 103-Clean water tank, 104-Sewage tank, 105-Vacuum motor module, 106-Guide member;
2-Bottom part, 201-Connecting part, 202-Bracket, 203-Plate brush, 204-Control module, 205-Battery, 206-Squeegee.

### DETAILED DESCRIPTION OF THE EMBODIMENTS

In order to facilitate the understanding of those skilled in the art, the present application will be further described below in conjunction with the embodiments and accompanying drawings, and the contents mentioned in the embodiments are not intended to limit the present application.

### First Embodiment

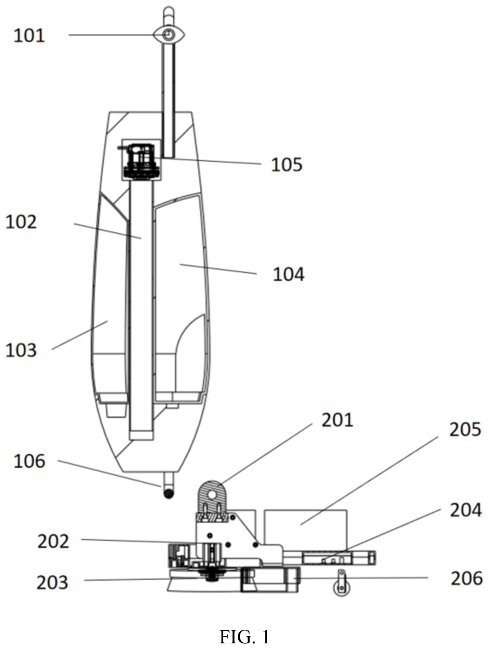

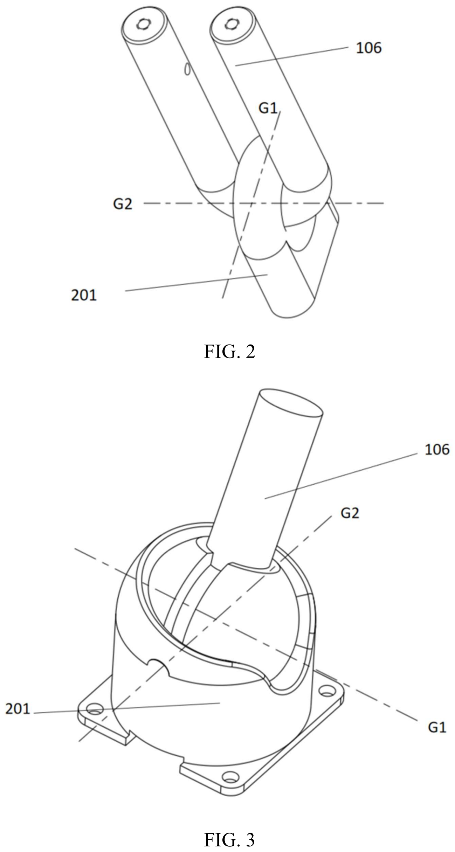

Referring to FIGS. 1 and 2, a handheld floor cleaner of the present application includes a guide part (1) and a bottom part (2). The guide part (1) includes a guide member (106). The bottom part (2) includes a connecting part (201). The guide part (1) is directly connected to the bottom part (2) through the guide member (106) and the connecting part (201). The guide part (1) and the bottom part (2) cooperates with each other to realize the adjustments in a cleaning direction and in a direction perpendicular to the cleaning direction. After the guide member is directly connected to the connecting part, a hinge axis (G1) in the cleaning direction and a hinge axis (G2) transverse to the cleaning direction are formed.

The guide part (1) includes a handle (101), a buckle (102), a clean water tank (103), a sewage tank (104), a vacuum motor module (105), and the guide member (106).

The bottom part (2) includes the connecting part (201), a bracket (202), a plate brush (203), a control module (204), a battery (205), and the squeegee (206). The battery (205) and the squeegee (206) are detachably connected to the bottom part (2). The battery (205) is provided with a buckle. The bottom part (2) is provided with a receiving groove configured for receiving the battery. A slot that matches the buckle is provided in the receiving groove. Since the buckle and the slot in the receiving groove are of existing design, the buckle and the slot are not shown in figures.

The guide member and the connecting part are directly connected to each other to form two circular connecting structures. In actual use, a circular ring of the guide member (106) has a central rotational axis G1, and can rotate around the G1 axis. A circular ring of the connecting part (201) also has a central rotational axis G2, and can rotate around the G2 axis. When a rotational axis of the rotational motion due to applying the external force does not coincide with the G1 and G2, a sidewall of the circular ring of the guide member (106) may be in contact with a sidewall of the circular ring of the connecting part (201), and two contact points are formed at the same time. The applied torques on the two contact points can respectively apply corresponding torques in the directions of G1 and G2. These two contact points are the force points for transmitting the torque. That is, the rotation of the guide member (106) may be transmitted to the connecting part (201) so that the connecting part (201) rotates synchronously.

### Second Embodiment

Referring to FIGS. 1 and 3, a handheld floor cleaner of the present application includes a guide part (1) and a bottom part (2). The guide part (1) includes a guide member (106). The bottom part (2) includes a connecting part (201). The guide part (1) is directly connected to the bottom part (2) through the guide member (106) and the connecting part (201). The guide part (1) and the bottom part (2) cooperates with each other to realize the adjustments in a cleaning direction and in a direction perpendicular to the cleaning direction. After the guide member is directly connected to the connecting part, a hinge axis (G1) in the cleaning direction and a hinge axis (G2) transverse to the cleaning direction are formed.

The guide part (1) includes a handle (101), a buckle (102), a clean water tank (103), a sewage tank (104), a vacuum motor module (105), and the guide member (106).

The bottom part (2) includes a connecting part (201), a bracket (202), a plate brush (203), a control module (204), a battery (205), and a squeegee (206). The battery (205) and the squeegee (206) are detachably connected to the bottom part (2). The battery (205) is provided with a buckle. The bottom part (2) is provided with a receiving groove configured for receiving the battery. A slot that matches the buckle is provided in the receiving groove. Since the buckle and the slot in the receiving groove are of existing design, the buckle and the slot are not shown in the figure.

The guide member and the connecting part are directly connected to each other to form a ball-groove connecting structure. In actual use, a ball wall of the guide member (106) has a central rotational axis G1, and the ring can rotate around the G1 axis. A ball wall of the connecting part (201) also has a central rotational axis G2, and the ring can rotate around the G2 axis. When a rotational axis of the rotational motion due to applying the external force does not coincide with the G1 and G2, a sidewall of the ball wall of the guide member (106) may be in contact with a sidewall of ball wall of the connecting part (201), and two contact points are formed at the same time. The applied torques on the two contact points can respectively apply corresponding torques in the directions of G1 and G2. These two contact points are the force points for transmitting the torque. That is, the rotation of the guide member (106) may be transmitted to the connecting part (201) so that the connecting part (201) rotates synchronously.

Certainly, according to specific needs, those skilled in the art can also set the two annular connecting structures as incomplete rings, or as the two rings having different sizes and diameters. Those skilled in the art can also expand the ball-groove connecting structure into a universal joint structure, which all can meet the function of transmitting torque.

The connection solutions of the present application involve only two components, so that the cost of components can be reduced and the maintainability is enhanced. Moreover, since there are only two static components, within the same space, the components can have higher strength and the load capacity can be increased. In addition, because the distance between the two axes of the above solutions is very small, the eccentric displacement generated is very small, so it is equivalent to concentric transmission of torque, there is no deflection, and the rotation is flexible.

As described above, the present application has the above-mentioned excellent characteristics, so that it can improve the performance that is not available in the prior art in use and become practical, and become a product with great practical value.

The above descriptions only illustrate preferred embodiments of the present application. For those skilled in the art, according to the idea of the present application, there will be changes in the specific implementation and application scope, and the application of the specification of the present application should not be construed as limiting the present application.

## Claims

1. A handheld floor cleaner, comprising:
a guide part (1) comprising guide member (106); and
a bottom part (2). comprising a connecting part (201),
wherein the guide part (1) is directly connected to the bottom part (2) through the guide member (106) and the connecting part (201); the guide part (1) and the bottom part (2) cooperates with each other to realize adjustments in a cleaning direction and in a direction perpendicular to the cleaning direction; and after the guide member (106) is directly connected to the connecting part (201), a hinge axis (G1) in the cleaning direction and a hinge axis (G2) transverse to the cleaning direction are formed.

2. The handheld floor cleaner according to claim 1, wherein the guide part (1) includes a handle (101) part, and the bottom part (2) includes a cleaning module (203).

3. The handheld floor cleaner according to claim 2, wherein the guide part (1) is provided with a liquid storage device that is detachably connected; and the liquid storage device is a clean water tank (103) and/or sewage tank (104).

4. The handheld floor cleaner according to claim 2, wherein the bottom part (2) includes a bracket (202), a squeegee (206), and a control unit (204).

5. The handheld floor cleaner according to claim 2, wherein the tool configured for floor cleaning is a plate brush or a roller brush.

6. The handheld floor cleaner according to claim 4, wherein the bottom part (2) further includes a battery (205) detachably connected to the bottom part (2); and wherein the battery (205) is provided with a buckle, the bottom part (2) is provided with a receiving groove configured to receive the battery, and a slot that matches the buckle is provided in the receiving groove.

7. The handheld floor cleaner according to claim 4, wherein a rubber strip of the squeegee is detachably connected.

8. The handheld floor cleaner according to any one of claims 1-7, wherein the guide member (106) and the connecting part (201) are directly connected to each other to form two circular connecting structures or a ball-groove connecting structure.
